# EUROPEAN PATENT SPECIFICATION

(11) **EP 1 780 945 B1**
(45) Date of publication and mention of the grant of the patent: **07.05.2008**
(21) Application number: 05023265.1
(22) Date of filing: 25.10.2005
(51) Int. Cl.: H04L 12/26

(54) **Method and network elements for content duplication in packet networks**
Verfahren und Netzwerkelemente zur Inhaltsduplizierung in Paketnetzwerken
Méthode et éléments de réseau pour la duplication de contenu dans des réseaux à paquets

(43) Date of publication of application: 02.05.2007
(73) Proprietor: SIEMENS AKTIENGESELLSCHAFT, 80333 München (DE)
(72) Inventor: Rappe, Pieter, 2460 Lichtaart (BE)

(56) References cited:
- EP-A- 1 265 454
- EP-A- 1 528 774

## Description

The present invention generally relates to packet duplication in telecommunications networks. In particular, the present invention relates to an improved method and improved network elements for supporting advanced lawful interception operations in IP telecommunications networks.

Lawful interception (LI) is the legally sanctioned official access to communications, such as telephone calls or e-mail messages, of a user under surveillance. In general, LI is a security process in which a network operator or service provider gives law enforcement officials access to the communications of private individuals or organizations. Country-specific laws regulate lawful interception procedures around the world.

A LI warrant may grant the authority to record the actual communications contents. To ensure that the observation results are, for example, admissible as evidence in a court of law, it is imperative that they are properly labeled during the recording process. Labeling may include the (coded) identity of the observed user, date and time of the recording, a unique identification of the recorded communications, and other information. Standardization organizations such as ETSI and 3GPP have created, or are in the process of defining, standards to facilitate the economic realization of lawful interception that complies with the national and international conventions and legislation.

In circuit switched telecommunications networks, the telephone exchange is the network element where the communication content is duplicated. The original connection is normally not affected, and a copy of the - usually bidirectional - communication content is passed to a monitoring facility or monitoring center for recording.

As telecommunications networks evolve from circuit switched to packet network based, and particularly to Internet Protocol (IP) based, traditional LI schemes developed for intercepting circuit switched communications are replaced by LI schemes that better address the packet based network infrastructures and their multimedia capabilities. In IP based telecommunications networks, there usually is a functional and physical separation between the bearer control entity and the call control entity. The bearer control entity is often also referred to as the Media Gateway (MG), and the call control entity often comprises a Media Gateway Controller (MGC). A gateway control protocol such as ITU-T H.248 or IETF MeGaCo is used for communication between the MGC and the MG.

The network element performing the duplication of communications content in an IP environment is often called Interception Access Point (IAP). A variety of network elements may serve as IAP for a given interception, including but not limited to a MG, an access gateway, or a media server. In general, any device controllable by means of a gateway control protocol may serve as IAP.

Gateway control protocols H.248 and Megaco, as currently implemented, enable the call control entity to instruct an IAP to create and forward a copy of a call content or communications content to the monitoring facility or center. With either protocol, however, only this basic interception function of creating and forwarding a copy of the actual communications contents is available. Disadvantageously, the monitoring center cannot flexibly be provided with advanced interception data and/or proper labeling of the intercepted call.

Further technical background is provided in the documents EP 1,528,774 A and EP 1,265,454 A.

It is therefore one object of the present invention to provide a novel method for content duplication in a telecommunications network. It is another object of the present invention to provide an improved content duplication node for a telecommunications network. It is yet another object of the present invention to provide an improved call control entity for a telecommunications network.

In accordance with the invention, there is provided a method for duplicating communications content in a telecommunications network, wherein the content is transported in a layered communications protocol comprising at least one protocol layer, the method comprising the steps of:
- receiving first data identifying the content to be duplicated;
- receiving second data identifying a lowest protocol layers to be duplicated; and
- duplicating the content as identified by said first data including all protocol information of the lowest protocol layer as identified by said second data, further including all higher layer protocol information.

An advantage thereof is that, by means of the second data, the protocol depth of the duplication may be influenced. For example, if the content is transported by the protocols RTP (real-time protocol), UDP (user datagram protocol), and IP (internet protocol), then by means of the second data the content alone, or the content plus the entire RTP protocol information (of which the content is the payload), or the entire IP traffic associated with the content to be duplicated could be selected for duplication.

A preferred application of the duplication method is lawful interception (LI), wherein the duplicated content and protocol information along with labels and/or parameters, if applicable, is forwarded to a monitoring facility or monitoring center.

The invention also provides a content duplication node, such as a MG or access gateway, configured for implementing the present invention.

The invention also provides a call control entity such as a MGC for supplying, using control protocol means, information and/or instructions to a content duplication node in order to control the inventive method.

In the following, embodiments of the invention will be described with reference to drawings, wherein:
Fig. 1 shows a network configuration for deploying the present invention;
Fig. 2 shows duplication or interception of communication content at various protocol levels;
Fig. 3 shows a functional overview of a lawful intercept configuration; and
Fig. 4 shows auxiliary intercept information that may be forwarded in conjunction with the communication content for various intercept configurations.

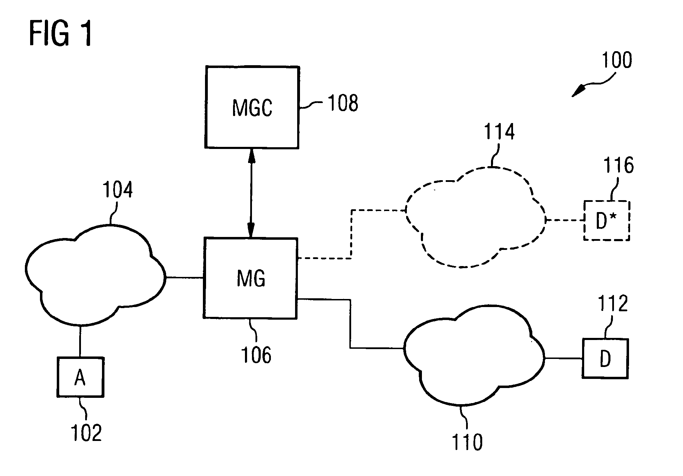

In Fig. 1, there is shown an exemplary network configuration 100 comprising a user terminal 102 connected via a first network section 104, a media gateway (MG) 106, and a second network section 110 to a destination 112. MG 106 is controlled by a media gateway controller (MGC) 108 in accordance with any (media) gateway control protocol such as H.248 and Megaco. In the MG 106, content is duplicated in accordance with the invention and forwarded via a third network section 114 to a duplication destination 116 (shown with dashed lines).

MG 106 performs the duplication of the communication content to and from user terminal 102 under the control of MGC 108, which in turn may be controlled by some other network entity (not shown). It shall be noted that, with reference to the terminal's communication relation, MGC 108 acts as a call control entity (CCE), whereas MG 106 acts as a content duplication node.

Existing (media) gateway control protocols such as H.248 and Megaco allow the CCE to instruct the content duplication node to forward the actual call contents or communications contents to the duplication destination 116. Existing gateway control protocols, however, do not allow for the CCE to instruct the content duplication node to include protocol information of those protocols in which the call content is embedded. In other words, with existing gateway control protocols, the protocol overhead is stripped from the communication contents and therefore lost at the duplication destination 116.

In accordance with the invention, protocol extensions are provided allowing the CCE to instruct the content duplication node to include any protocol level or layer below the actual communication content, i.e., any "overhead" necessary for conveying the voice or data in the communications network.

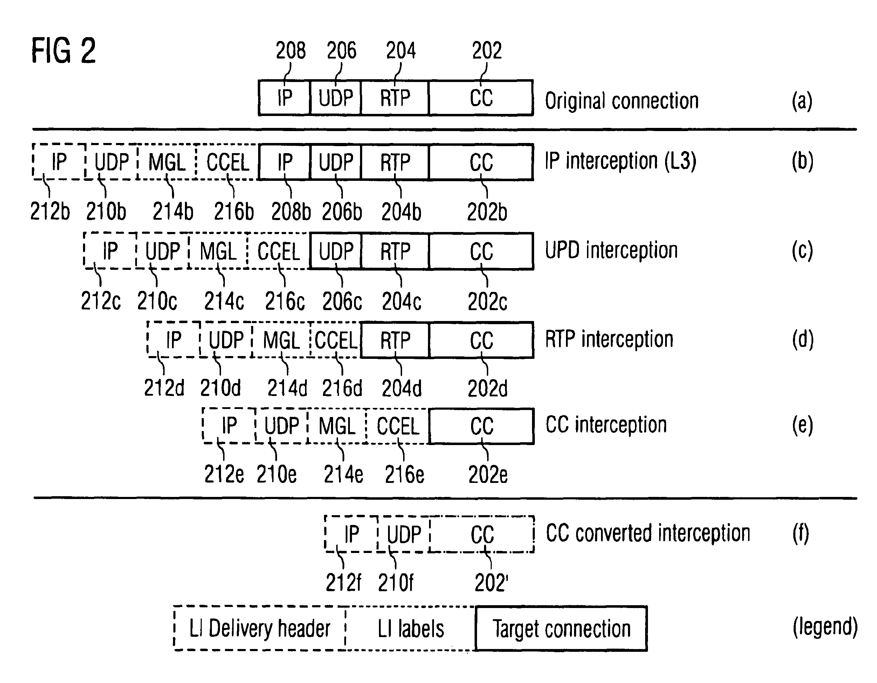

This procedure is illustrated with reference to fig. 2 using a typical Voice over IP (VoIP) communication content stream as an example. In fig. 2 (a), there is schematically shown the original connection data comprising call content (CC) 202, real-time protocol (RTF) protocol information 204, user datagram protocol (UDP) protocol information 206, and internet protocol (IP) protocol information 208. It shall be noted that "protocol information" may refer to any protocol information such as headers, trailers, packet counters, payload identifiers, priority indicators, parameters, labels, and other information included to allow communication at the respective protocol layer in conformance with the respective national or international standard(s).

When instructed by the CCE (in the example of fig. 1: MGC 108), the content duplication node (in the example of fig. 1: MG 106) may duplicate the entire IP packet comprising the UDP datagram, in turn comprising the RTP packet, in turn comprising the actual communication content CC (which may be encoded voice or data), as shown in fig. 2 (b). To that end, MGC 108 instructs MG 106 by means of first data as to which terminal equipment's content is to be duplicated, and by means of second data that IP level duplication is required, whereupon MG 106 duplicates the communication content associated with terminal equipment 102 including IP protocol information and all higher protocol layers' protocol information.

The duplicated content 202b..208b may be encapsulated in a transport protocol in accordance with the duplication destination's capabilities. In the example of fig. 2 (b)-(f), the duplicated content is sent in the form of UDP datagrams over IP to duplication destination 116. The protocol information necessary for this encapsulation is schematically shown as IP delivery protocol information 212b and UDP delivery protocol information 210b. In the schematic of fig. 2 (b)-(f), this delivery protocol information is shown within dashed lines.

MG 106 may also be instructed by MGC 108 to include labels or other parameters, either received from the MGC 108 and transparently inserted into the data stream to duplication destination 116 as call control entity labels (CCEL) 216b, or created by the MG 106 and inserted into the data stream to duplication destination 116 as media gateway labels (MGL) 214b. These labels or parameters, CCEL and MGL, will be discussed in detail further below and are shown in fig. 2 (b)-(e) within dotted lines.

Third data may be provided to the MG 106 specifying, for each protocol layer to be duplicated in accordance with the second data, the amount of detail to be duplicated. For example, certain protocol information included in the original connection's content stream 202..208 may serve to mitigate the effect of transmission errors, for example by including a redundancy coding scheme. It may, however, not be desirable to receive such protocol information at the duplication destination 116, as for example the third network section 114 may employ its own error correction scheme, rendering any other error correction schemes meaningless. In other embodiments, the amount of detail to be duplicated will be reduced in accordance with the third data to save bandwidth in the third network section 114 through which the duplicated information traverses.

The CCE (e.g., MGC 108) may also instruct the content duplication node (e.g., MG 106) to create the following duplicates:
- all information 202c..206c above the IP layer, i.e., the protocol information of the UDP layer and all higher layers, as shown in fig. 2 (c); or
- all protocol information 202d..204d of the RTP layer and all higher layers, as shown in fig. 2 (d); or
- the call content or connection content 202e only, as shown in fig. 2 (e).

As before, this is achieved by MGC 108 instructing MG 106 by means of first data as to which terminal equipment's content is to be duplicated, and by means of second data what level's duplication is required (UDP, RTP, CC), whereupon MG 106 duplicates the communication content associated with the references terminal equipment 102 including UDP, RTP protocol information and all higher protocol layers' protocol information, respectively.

The duplicated content may again be encapsulated in a transport protocol in accordance with the duplication destination's capabilities, as described with more details with reference to fig. 2 (b) above. As before, MG 106 may optionally be instructed by MGC 108 to include labels or other parameters, either received from MGC 108 and transparently inserted into the data stream to duplication destination 116 as call control entity labels (CCEL) 216c..e, or created by MG 106 and inserted into the data stream to duplication destination 116 as media gateway labels (MGL) 214c..e.

It shall be noted that it may be desirable or even necessary to convert the communication content or call content before forwarding the duplicated content to duplication destination 216, for example if the communication is a voice call using a codec not supported by duplication destination 216. In such cases, MG 106 may optionally transcode the call content to a more favorable format. Modification or transcoding of communication content may also be applied to encrypted communications. Forwarding transcoded or otherwise converted communication content is schematically shown fig. 2 (f). It shall be noted that content transcoding or conversion may of course be applied in conjunction with any of the different layers of protocol information duplication as described with reference to fig. 2 (b) - (e) above.

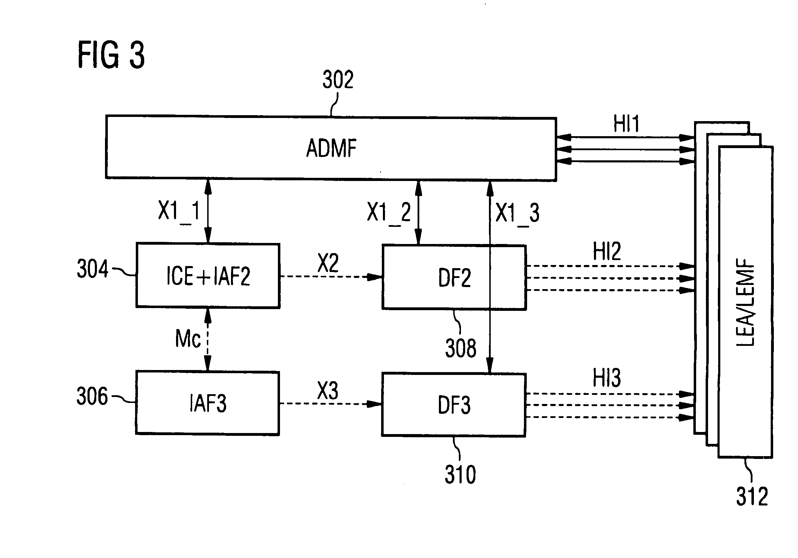

As indicated above, the present invention may preferentially be embodied in a lawful interception implementation. Fig. 3 shows a functional overview of an exemplary lawful intercept configuration comprising an administration function (ADMF) 302; an interception control element (ICE) 304, which has an interception access function 2 (IAF2); and an element 306 having an interception access function 3 (IAF3). The LI configuration of Fig. 3 further comprises delivery functions (DF2 and DF3) 308, 310; and a law enforcement monitoring function (LEMF) 312, usually located at a law enforcement agency (LEA). A more detailed description of the elements, interfaces X1_1, X1_2, X1_3, X2, X3, Mc, and handover interfaces HI1..3, as shown in fig. 3, can be found in 3GPP TS 33.107. In general, the actual call content is delivered to LEMF 312 via DF3 310, while intercept related information (IRI) is delivered via DF2 308.

Applying the functional structure presented in fig. 3 to the exemplary network configuration of fig. 1, the call control element, or MGC 108, would act as ICE 304 with reference to terminal 102. The content duplication node, or MG 106, would act as IAF3 306 with reference to terminal 102. The content duplication node is sometimes also referred to as interception access point (IAP) in a LI context. Third network section 114 and duplication destination 116, as shown in fig. 1, schematically represent the delivery functions 308, 310 and the LEMF 312 of fig. 3. In operation, the ADMF 302 exercises control over the intercept by controlling MGC 108 which in turn controls MG 106 accordingly.

With the invention, and as explained generally with reference to content duplication above, the lawful interception information received at the LEMF 312 may comprise the following information:
- the actual call content accompanied by all protocol information of a desired level of protocol depth, for example all information contained in the OSI network layer or in the internet layer, or any subset thereof;
- labels, parameters, and other information passed from the ICE to the IAP for inclusion in the information sent to the LEMF 312; such labels or parameters may comprise a target identification, a connection identification, and/or an intercepting control identity; and/or
- labels, parameters, and other information created by the IAP for inclusion in the information sent to the LEMF 312; such labels or parameters may comprise a duplication timestamp; a duplication node identifier or IAP identifier; direction information on intercepted packets; or a packet counter.

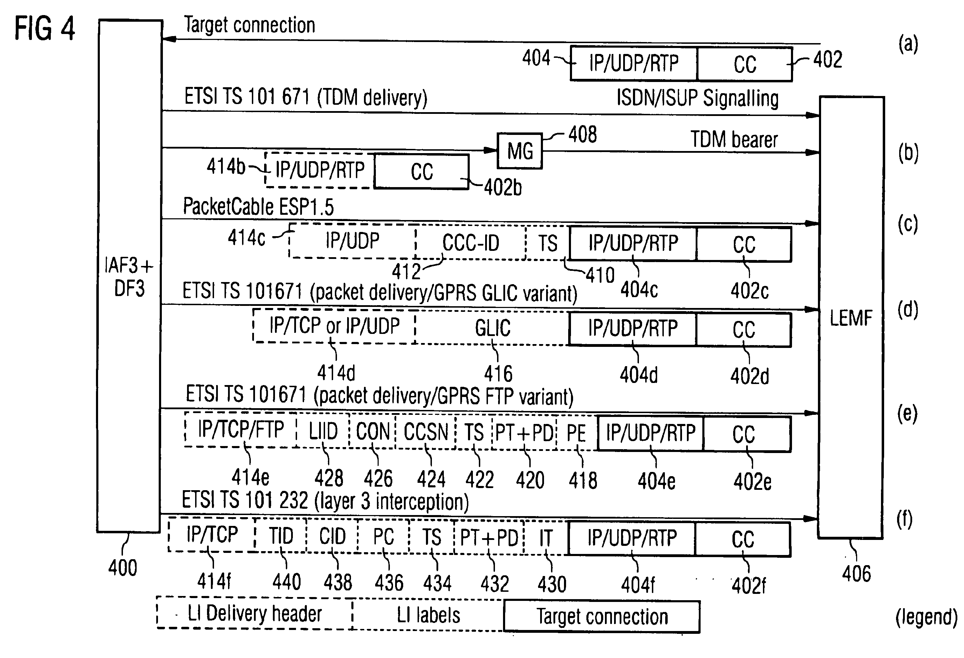

Further details on the information that optionally may be included in the LI information towards LEMF 312 will now be explained with reference to five exemplary modes of delivery of intercepted information shown in Fig. 4. Such information may, for example, be included by the IAP or the delivery function 3 (DF3). For purposes of explanation, communication content 402 is again assumed to be encapsulated in the RTP/UDP/IP layered communication protocols 404. Communication content may generally be encapsulated in any other known protocol hierarchy, as will be readily apparent to those with skills in the art.

In a first mode of delivery of intercepted information from an intercept access point or function 400, which in fig. 4 is shown to also comprise the delivery function DF3, delivery to LEMF 406 is accomplished by TDM as specified in ETSI TS 101 671, as shown in fig. 4 (b). The duplicated call content 402b cannot be transferred to the TDM port of LEMF 406 without conversion. Such conversion can be accomplished in the IAF 400 or by means of a separate media gateway 408 which may then be addressed by protocol headers 414b. In such conversion, all other information such as protocol information 404, labels, or parameters, is lost and therefore needs to be included in the ISDN or ISUP signaling using any known method such as user-to-user signaling (UUS) or proprietary signaling protocols over the signaling channel. In general, all protocol information, labels and/or parameters discussed herein may be transported in a suitable protocol container using TDM signaling.

With reference to fig. 4 (c), there is shown a second mode of delivery of intercepted information particularly useful for performing LI in conformance with PacketCable Electronic Surveillance Specification ESP1.5. The IAF duplicates call content 402c and the desired level of protocol information 404c in accordance with the procedures explained above with reference to fig. 2, and adds protocol information 414c for communicating with LEMF 406 such as UDP/IP headers. The IAF may further include a call content connection (CCC) ID 412 as a unique identifier per target and connection, preferably created by a corresponding ICE such as MGC 108, and a time stamp (TS) 410, preferably created by IAF 400.

With reference to fig. 4 (d), there is shown a third mode of delivery of intercepted information particularly useful for performing LI in conformance with ETSI TS 101 671 GPRS LI Correlation (GLIC). The IAF duplicates call content 402d and the desired level of protocol information 404d in accordance with the procedures explained above with reference to fig. 2, and adds protocol information 414d for communicating with LEMF 406 such as UDP/IP or TCP/IP headers. The IAF may further include GLIC information 416 which may comprise a gateway GPRS support node (GGSN) ID, a sequence number or packet counter, and a packet direction, preferably created by IAF 400.

With reference to fig. 4 (e), there is shown a fourth mode of delivery of intercepted information particularly useful for performing LI in conformance with ETSI TS 101 671 GPRS FTP variant. The IAF duplicates call content 402e and the desired level of protocol information 404e in accordance with the procedures explained above with reference to fig. 2, and adds protocol information 414e for communicating with LEMF 406 such as FTP/TCP/IP headers. The IAF may further include the following information in the data packets transmitted to the LEMF 406:
- a LI target identifier (LIID) 428;
- a correlation number (CON) 426 which may comprise a GGSN-ID and a charging ID;
- a packet counter or communication content sequence number (CCSN) 424;
- a time stamp (TS) 422;
- a parameter 420 identifying payload direction (PD) and payload type (PT); and/or
- a private extension (PE) field 418.

Finally, with reference to fig. 4 (f), there is shown a fifth mode of delivery of intercepted information particularly useful for performing LI in conformance with ETSI TS 101 232 for layer 3 interception. The IAF duplicates call content 402f and the desired level of protocol information 404f in accordance with the procedures explained above with reference to fig. 2, and adds protocol information 414f for communicating with LEMF 406 such as TCP/IP headers. The IAF may further include the following information in the data packets transmitted to the LEMF 406:
- a target identifier (TID) 440 which may comprise an authorization country code (ACC) and a LIID;
- a communication ID (CID) 438 which may comprise an operator ID (OPID), a network element ID (NEID), a communication ID number (CIN) and a delivery country code (DCC) ;
- a packet counter (PC) 436;
- a time stamp (TS) 434;
- a parameter 432 identifying payload direction (PD) and payload type (PT); and/or
- an interception type (IT) 430.

Generally, information elements, parameters, or labels such as information elements, parameters, or labels 410, 412, 416, 418..440 are created by either the call controlling entity such as a MGC or the IAP such as a MG as follows: Statically engineered information and information determined on a per-call basis is preferably generated by the controlling entity and forwarded to the IAP which then transparently includes this information in the data stream sent to LEMF 406. Run-time information such as timestamps 410, 422, 434 or packet counters 436, 424 is preferentially created upon instruction from the controlling entity by the IAP, or IAF, and then forwarded to the LEMF.

Information elements, parameters, or labels such as information elements, parameters, or labels 410, 412, 416, 418..440 may be forwarded under the H.248 protocol for example within the Topology Descriptor, Termination State Descriptor, Stream Descriptor, and/or Package Descriptor. Instructions from a MGC to a MG may also be forwarded under the H.248 protocol for example within the Topology Descriptor, Termination State Descriptor, Stream Descriptor, and/or Package Descriptor. In more detail, exemplary H.248 instructions from MGC to MG may have the following format:
- Topology (Ts, Td, Topology, [Stream], [Level]), wherein Ts is the source termination, Td is the destination termination, and [Level] is the second data;
- (Ts, Td, Oneway, "", "L3") for level 3 (e.g., IP level) interception of incoming streams at Ts;
- (Ts, Td, Onewayexternal, "", "CC") for call content level interception of outgoing streams at Ts; and/or
- (Ts, Td, Oneway), wherein the omitted second data results in a default (predefined or preset) behavior such as CC level interception.

It shall be noted that the present invention can be applied if the intercept strategy is a real-time strategy prioritizing the real-time availability of the intercepted information, e.g., for "live" listening-in, under which strategy isolated packet losses are tolerable, and unsecured protocols such as UDP/IP are employed for forwarding intercepted information to a LEMF.

The invention can also be applied if the intercept strategy prioritizes complete observation, i.e., where no packet losses are tolerable, and "live" listening-in is not a priority. Under such strategy, protocols securing the transmission of packets such as TCP/IP are typically employed.

## Claims

1. A method for duplicating communications content in a telecommunications network, wherein the content is transported in a layered communications protocol comprising at least one protocol layer,
**characterized by the steps of:**
- receiving first data identifying the content to be duplicated;
- receiving second data identifying a lowest protocol layer to be duplicated; and
- duplicating the content as identified by said first data including all protocol information of the lowest protocol layer as identified by said second data, further including all higher layer protocol information.

2. The method of claim 1, further comprising the steps of:
- receiving third data identifying, for the lowest protocol layer identified by the second data and each higher protocol layer, the amount of protocol information to be duplicated; and
- during the duplicating step, duplicating the protocol information in accordance with said third information.

3. The method of any of claims 1 or 2, wherein the protocol information is included in the duplication step in accordance with a preset lowest protocol layer if the received second data is inconclusive or missing.

4. The method of any of claims 1 to 3, further comprising the steps of:
- receiving instructions relating to labels or parameters to be created and added to the duplicate content; and
- creating and adding labels or parameters to the duplicate content in accordance with said instructions.

5. The method of any of claims 1 to 4, further comprising the steps of:
- receiving labels or parameters to be added to the duplicate content; and
- adding the received labels or parameters to the duplicate content.

6. The method of any of claims 1 to 5, wherein the call content is a packet or a stream of packets embedded in the protocol layers RTP, UDP, and IP.

7. The method of any of claims 4 to 6 when dependent on claim 4, wherein instructions are received for creating and adding either or all of the following labels or parameters:
- a duplication time stamp;
- a duplication node identifier or IAP identifier;
- a direction information representing the direction of an intercepted piece of content; and/or
- a packet counter.

8. The method of any of claims 5 to 7 when dependent on claim 5, wherein the received labels or parameters comprise:
- a target identification;
- a connection identification; and/or
- an intercepting control identity.

9. The method of claim 8, where the target information is a ETSI LIID, the connection identification is a ETSI CIN, and/or the intercepting control identity is a ETSI NEID.

10. The method of any of claims 1 to 9, further comprising the step of forwarding the duplicated content and protocol information to a monitoring center of a law enforcement agency or a delivery function 3 of a lawful interception implementation.

11. A content duplication node (106, 306, 400) for a telecommunications network (100), **characterized by** means for implementing the method of any of claims 1 to 10.

12. A call control entity (108, 304) for a telecommunications network (100), comprising protocol means for instructing a content duplication node (106, 306, 400) to duplicate a specific communications content, the content embedded in a layered communications protocol comprising at least one protocol layer, the call control entity further comprising protocol means for instructing the content duplication node to duplicate all protocol information of a selected lowest protocol layer of the layered communications protocol and all higher protocol layers.

13. The call control entity of claim 12, further comprising protocol means for creating and sending instructions relating to labels or parameters to be created and added to the duplicate content to the content duplication node.

14. The call control entity of claim 13, further comprising protocol means for creating and sending instructions relating to any or all of the following labels or parameters:
- a duplication time stamp;
- an identity of the duplication node;
- a direction information representing the direction of an intercepted piece of content; and/or
- a packet counter.

15. The call control entity of any of claims 11 to 14, further comprising protocol means for creating labels or parameters to be added to the duplicate content and sending said labels or parameters to the content duplication node and instructing the content duplication node to add said labels or parameters to the duplicate content.

16. The call control entity of claim 15, further comprising protocol means for creating and sending any or all of the following labels or parameters:
- a target identification such as the ETSI LIID;
- a connection identification such as the ETSI CIN; and/or
- an intercepting control identity such as the ETSI NEID.

17. The call control entity of any of claims 11 to 16, wherein the protocol means comprise a gateway control protocol.

18. The call control entity of claim 17, wherein the gateway control protocol is ITU-T H.248 or IETF MeGaCo.

## Patentansprüche

1. Verfahren zur Duplizierung von Kommunikationsinhalt in einem Telekommunikationsnetzwerk, wobei der Kommunikationsinhalt in einem schichtweise aufgebauten Kommunikationsprotokoll transportiert wird, welches mindestens eine Protokollschicht umfasst,
**gekennzeichnet durch** die folgenden Schritte:
- Empfangen von ersten Daten, welche den Inhalt kennzeichnen, der zu duplizieren ist;
- Empfangen von zweiten Daten, welche eine niedrigste Protokollschicht kennzeichnen, die zu duplizieren ist; und
- Duplizieren des **durch** die besagten ersten Daten gekennzeichneten Inhalts einschließlich aller Protokollinformationen der **durch** die besagten zweiten Daten gekennzeichneten niedrigsten Protokollschicht und ferner einschließend alle Informationen höherer Protokollschichten.

2. Verfahren gemäß Anspruch 1, welches ferner die folgenden Schritte umfasst:
- Empfangen von dritten Daten, die für die niedrigste durch die zweiten Daten identifizierte Protokollschicht und jede darüber liegende Protokollschicht angeben, welche Menge an Protokollinformationen dupliziert werden soll; und
- während des Duplizierungsschritts Duplizieren der Protokollinformationen entsprechend den besagten dritten Daten.

3. Verfahren gemäß einem der Ansprüche 1 oder 2, bei dem die Protokollinformationen in dem Duplizierungsschritt entsprechend einer vorab eingestellten niedrigsten Protokollebene eingefügt werden, wenn die empfangenen zweiten Daten nicht schlüssig sind oder fehlen.

4. Verfahren gemäß einem der Ansprüche 1 bis 3, welches ferner die folgenden Schritte umfasst:
- Empfangen von Anweisungen in Bezug auf Etiketten oder Parameter, die erzeugt und in den duplizierten Inhalt eingefügt werden sollen; und
- Erstellen von Etiketten oder Parametern und Einfügen derselben in den duplizierten Inhalt in Übereinstimmung mit den besagten Anweisungen.

5. Verfahren gemäß einem der Ansprüche 1 bis 4, welches ferner die folgenden Schritte umfasst:
- Empfangen von Etiketten oder Parametern, die in den duplizierten Inhalt eingefügt werden sollen; und
- Einfügen der empfangenen Etiketten oder Parameter in den duplizierten Inhalt.

6. Verfahren gemäß einem der Ansprüche 1 bis 5, bei dem der Verbindungsinhalt ein Datenpaket oder ein Strom von Datenpaketen ist, das/der in die Protokollschichten RTP, UDP und IP eingebettet ist.

7. Verfahren gemäß einem der Ansprüche 4 bis 6, sofern abhängend von Anspruch 4, bei dem Anweisungen empfangen werden, eines/einen oder aller der folgenden Etiketten oder Parameter zu erstellen und einzufügen:
- einen Duplizierungszeitstempel;
- eine Duplizierungsknotenkennung oder Überwachungszugriffspunkt (IAP) -Kennung;
- eine Richtungsinformation, die die Richtung eines überwachten Inhalts angibt, und/oder
- einen Datenpaketzähler.

8. Verfahren gemäß einem der Ansprüche 5 bis 7, sofern abhängend von Anspruch 5, bei dem die empfangenen Etiketten oder Parameter Folgendes umfassen:
- eine Zielkennung;
- Eine Verbindungskennung; und/oder
- eine Überwachungssteuerungskennung.

9. Verfahren gemäß Anspruch 8, bei dem die Zielinformation eine Telekommunikationsüberwachungs-Zielkennung LIID gemäß ETSI, die Verbindungskennung eine Kommunikationskennnummer CIN gemäß ETSI und/oder die Überwachungssteuerungskennung eine Netzwerkelementkennung NEID gemäß ETSI ist.

10. Verfahren gemäß einem der Ansprüche 1 bis 9, welches ferner den Schritt umfasst, die duplizierten Inhalte und Protokollinformationen an eine Überwachungszentrale einer Strafverfolgungsbehörde oder an eine Übergabefunktion 3 einer Implementierung für die Telekommunikationsüberwachung weiterzuleiten.

11. Inhaltsduplizierungsknoten (106, 306, 400) für ein Telekommunikationsnetzwerk (100), **gekennzeichnet durch** Mittel zur Implementierung des Verfahrens gemäß einem der Ansprüche 1 bis 10.

12. Verbindungssteuerungseinheit (108, 304) für ein Telekommunikationsnetzwerk (100), welche Protokollmittel umfasst, um einen Inhaltsduplizierungsknoten (106, 306, 400) anzuweisen, einen bestimmten Kommunikationsinhalt zu duplizieren, wobei der Inhalt in ein schichtweise aufgebautes Kommunikationsprotokoll eingebettet ist, das mindestens eine Protokollschicht umfasst, wobei die Verbindungssteuerungseinheit ferner Protokollmittel umfasst, um den Inhaltsduplizierungsknoten anzuweisen, sämtliche Protokollinformationen einer ausgewählten niedrigsten Protokollschicht des schichtweise aufgebauten Kommunikationsprotokolls sowie aller darüber liegenden Protokollschichten zu duplizieren.

13. Verbindungssteuerungseinheit gemäß Anspruch 12, welche ferner Protokollmittel umfasst, um Anweisungen zu erzeugen und zu senden, die sich auf Etiketten oder Parameter beziehen, welche erzeugt und in den duplizierten Inhalt zum Inhaltsduplizierungsknoten eingefügt werden sollen.

14. Verbindungssteuerungseinheit gemäß Anspruch 13, welche ferner Protokollmittel umfasst, um Anweisungen zu erzeugen und zu senden, die sich auf eines/einen oder aller der folgenden Etiketten oder Parameter beziehen:
- einen Duplizierungszeitstempel;
- eine Duplizierungsknotenkennung;
- eine Richtungsinformation, die die Richtung eines überwachten Inhalts angibt, und/oder
- einen Datenpaketzähler.

15. Verbindungssteuerungseinheit gemäß einem der Ansprüche 11 bis 14, welche ferner Protokollmittel umfasst, um Etiketten oder Parameter zu erzeugen, die in den duplizierten Inhalt eingefügt werden sollen, und um die besagten Etiketten oder Parameter an den Inhaltsduplizierungsknoten zu senden und den Inhaltsduplizierungsknoten anzuweisen, die besagten Etiketten oder Parameter in den duplizierten Inhalt einzufügen.

16. Verbindungssteuerungseinheit gemäß Anspruch 15, welche ferner Protokollmittel umfasst, um eines/einen oder alle der folgenden Etiketten oder Parameter zu erzeugen und zu senden:
- eine Zielkennung, beispielsweise eine Telekommunikationsüberwachungs-Zielkennung LIID gemäß ETSI;
- eine Verbindungskennung, beispielsweise eine Kommunikationskennnummer CIN gemäß ETSI; und/oder
- eine Überwachungssteuerungskennung, beispielsweise eine Netzwerkelementkennung NEID gemäß ETSI.

17. Verbindungssteuerungseinheit gemäß einem der Ansprüche 11 bis 16, bei der die Protokollmittel ein Gateway-Steuerungsprotokoll umfassen.

18. Verbindungssteuerungseinheit gemäß Anspruch 17, bei der das Gateway-Steuerungsprotokoll das ITU-T H.248 oder das IETF MeGaCo ist.

## Revendications

1. Procédé de duplication d'un contenu de communication dans un réseau de télécommunications, dans lequel le contenu est transporté dans un protocole de communications à couches comprenant au moins une couche de protocole,
**caractérisé par** les étapes de :
- réception de premières données identifiant le contenu à dupliquer ;
- réception de deuxièmes données identifiant une couche de protocole la plus basse à dupliquer ; et
- duplication du contenu identifié par lesdites premières données, incluant toutes les informations de protocole de la couche de protocole la plus basse identifiée par lesdites deuxièmes données, incluant en outre toutes les informations de protocole de couches supérieures.

2. Procédé selon la revendication 1, comprenant, en outre, les étapes de :
- réception de troisièmes données identifiant, pour la couche de protocole la plus basse identifiée par les deuxièmes données et chaque couche de protocole supérieure, la quantité d'informations de protocole à dupliquer ; et
- duplication, pendant la phase de duplication, des informations de protocole conformes auxdites troisièmes informations.

3. Procédé selon l'une quelconque des revendications 1 ou 2, dans lequel les informations de protocole sont incluses dans l'étape de duplication conformément à une couche de protocole la plus basse prédéfinie si les deuxièmes informations reçues sont non concluantes ou manquantes.

4. Procédé selon l'une quelconque des revendications 1 à 3, comprenant, en outre, les étapes de :
- réception d'instructions concernant des étiquettes ou paramètres devant être créés et ajoutés au contenu dupliqué ; et
- création et ajout d'étiquettes ou paramètres au contenu dupliqué conformément auxdites instructions.

5. Procédé selon l'une quelconque des revendications 1 à 4, comprenant, en outre, les étapes de :
- réception d'étiquettes ou paramètres devant être ajoutés au contenu dupliqué ; et
- ajout des étiquettes ou paramètres reçus au contenu dupliqué.

6. Procédé selon l'une quelconque des revendications 1 à 5, dans lequel le contenu d'appel est un paquet ou un flux de paquets intégré dans les couches de protocole RTP, UDP et IP.

7. Procédé selon l'une quelconque des revendications 4 à 6 lorsqu'elles dépendent de la revendication 4, dans lequel des instructions sont reçues pour créer et ajouter une partie ou la totalité des étiquettes ou paramètres suivant(e)s :
- une estampille de duplication ;
- un identifiant de noeud de duplication ou identifiant IAP ;
- une information de direction représentant la direction d'une partie de contenu interceptée ; et/ou
- un compteur de paquets.

8. Procédé selon l'une quelconque des revendications 5 à 7 lorsqu'elles dépendent de la revendication 5, dans lequel les étiquettes ou paramètres reçus comprennent :
- une identification de cible ;
- une identification de connexion ; et/ou
- une identité de commande d'interception.

9. Procédé selon la revendication 8, dans lequel l'information de cible est un ETSI LIID, l'identification de connexion est ETSI CIN et/ou l'identité de commande d'interception est un ETSI NEID.

10. Procédé selon l'une quelconque des revendications 1 à 9, comprenant, en outre, les étapes de transmission du contenu dupliqué et des informations de protocole à un centre de surveillance d'une agence d'application de la loi ou à une fonction de remise 3 d'une exécution de l'interception légale.

11. Noeud de duplication de contenus (106, 306, 400) pour un réseau de télécommunications (100), **caractérisé par** un moyen pour exécuter le procédé selon l'une quelconque des revendications 1 à 10.

12. Entité de contrôle d'appel (108, 304) pour un réseau de télécommunications (100), comprenant un moyen de protocole pour donner à un noeud de duplication de contenus (106, 306, 400) l'instruction de dupliquer un contenu de communication spécifique, le contenu étant intégré dans un protocole de communications à couches comprenant au moins une couche de protocole, l'entité de contrôle d'appel comprenant, en outre, un moyen de protocole pour donner au noeud de duplication de contenus l'instruction de dupliquer toutes les informations de protocole d'une couche de protocole la plus basse sélectionnée du protocole de communications à couches et toutes les couches de protocole supérieures.

13. Entité de contrôle d'appel selon la revendication 12, comprenant, en outre, un moyen de protocole pour créer et envoyer au noeud de duplication de contenus des instructions concernant des étiquettes ou paramètres devant être créés et ajoutés au contenu dupliqué.

14. Entité de contrôle d'appel selon la revendication 13, comprenant, en outre, un moyen de protocole pour créer et envoyer des instructions concernant une partie, ou la totalité, des étiquettes ou paramètres suivant(e)s :
- une estampille de duplication ;
- une identité du noeud de duplication ;
- une information de direction représentant la direction d'une partie de contenu interceptée ; et/ou
- un compteur de paquets.

15. Entité de contrôle d'appel selon l'une quelconque des revendications 11 à 14, comprenant, en outre, un moyen de protocole pour créer des étiquettes ou paramètres devant être ajoutés au contenu dupliqué et envoyer lesdites étiquettes ou paramètres au noeud de duplication de contenus et donner au noeud de duplication de contenus l'instruction d'ajouter lesdites étiquettes ou paramètres au contenu dupliqué.

16. Entité de contrôle d'appel selon la revendication 15, comprenant, en outre, un moyen de protocole pour créer et envoyer une partie, ou la totalité, des étiquettes ou paramètres suivant(e)s :
- une identification de cible telle que le ETSI LIID ;
- une identification de connexion telle que le ETSI CIN ; et/ou
- une identité de commande d'interception telle que le ETSI NEID.

17. Entité de contrôle d'appel selon l'une quelconque des revendications 11 à 16, dans laquelle le moyen de protocole comprend un protocole de commande de passerelle.

18. Entité de contrôle d'appel selon la revendication 17, dans laquelle le protocole de commande de passerelle est H.248 de l'ITU-T ou MeGaCo de l'IETF.
